## Europäisches Patentamt
## European Patent Office
## Office européen des brevets

(19)

(11) Veröffentlichungsnummer: **0 275 992**
**A2**

(12)

# EUROPÄISCHE PATENTANMELDUNG

(21) Anmeldenummer: **88100778.5**

(22) Anmeldetag: **20.01.88**

(51) Int. Cl.⁴: **G 05 B 19/417**

(30) Priorität: **21.01.87 DE 3701554**

(43) Veröffentlichungstag der Anmeldung:
**27.07.88 Patentblatt 88/30**

(84) Benannte Vertragsstaaten: **DE GB**

(71) Anmelder: **Dürr GmbH**
**Spitalwaldstrasse 18**
**D-7000 Stuttgart 40 (DE)**

(72) Erfinder: **Kuehrer, Gerhard**
**Ludwigsburger Str. 46**
**D-7141 Benningen (DE)**

(74) Vertreter: **Hoeger, Stellrecht & Partner**
**Uhlandstrasse 14c**
**D-7000 Stuttgart 1 (DE)**

(54) **Maschinenanlage mit mehreren Aktoren.**

(57) Die Erfindung betrifft eine Maschinenanlage mit dezentraler Verteilung von Steuereinrichtungen und Leistungsversorgungseinrichtungen. Gemäß der Erfindung sind mehrere oder alle Aktoren jeweils an eine Hilfssteuereinheit angeschlossen, die mit der zentralen Steuereinheit über einen Datenbus verbunden ist, wobei jede Hilfssteuereinheit direkt mit einer Leistungsverstärkereinheit für ihren zugeordneten Aktor und über einen Leistungsbus mit einer zentralen Leistungsverteilereinheit verbunden ist.

FIG. 1

EP 0 275 992 A2

# Beschreibung

## Maschinenanlage mit mehreren Aktoren

Die Erfindung betrifft eine Maschinenanlage mit mehreren Aktoren, mit eine zentrale Steuereinheit umfassenden Steuereinrichtungen und mit eine zentrale Leistungsverteilereinheit umfassenden Leistungsversorgungseinrichtungen.

Derartige Anlagen sind in Form von Fertigungsstraßen, Fördersystemen, verfahrenstechnischen Anlagen usw. weit verbreitet und umfassen als Aktoren hauptsächlich Elektromotoren, aber auch andere elektrisch steuerbare, insbesondere elektromechanische Betätigungseinrichtungen, deren Betätigung bzw. Ansteuerung koordiniert werden muß, was mit Hilfe von Steuereinrichtungen erfolgt, die im wesentlichen zu einer zentralen Steuereinheit in einem Schaltschrank zusammengefasst sind. In entsprechender Weise erfolgt auch die Leistungsversorgung der einzelnen Aktoren über Leistungsversorgungseinrichtungen, die mit Ausnahme der Verbindungsleitungen ebenfalls zu einer zentralen Leistungsverteilereinheit in einem Schaltschrank zusammengefasst sind, gegebenenfalls im gleichen Schaltschrank wie die zentrale Steuereinheit.

Bereits bei Maschinenanlagen mit vergleichsweise wenigen Aktoren führt die weitgehend zentrale Zusammenfassung der Steuereinrichtungen und der Leistungsversorgungsein richtungen dazu, daß eine große Anzahl von Leistungs-und Steuerkabeln verlegt werden muß, was erhebliche Material- und Installationskosten mit sich bringt. Tatsächlich wird bei mittleren und größeren Anlagen sehr schnell eine Situation errecht, in der die Kosten für die Elektroinstallation, d.h. die Kosten für die Leitungen und Kabel und für deren Verlegung zwischen den einzelnen Aktoren und dem Schaltschrank, selbst bei komplizierten elektronischen Steuerungen und für hohe Leistungen ausgelegten Leistungsversorgungseinrichtungen etwa die Hälfte der Gesamtkosten für die elektrischen Einrichtungen ausmachen. Des weiteren bringt die Verelegung zahlreicher elektrischer Kabel und Leitungen im Hallenboden beträchtliche Verzögerungen bei der Inbetriebnahme einer neuen oder geänderten Maschinenanlage mit sich, da das Verlegen der zahlreichen Kabel und Leitungen über zum Teil erhebliche Entfernungen von beispielsweise 100 m und mehr von Natur aus bereits viel Zeit in Anspruch nimmt und da sich außerdem selbst bei sorgfältiger Ausarbeitung der Anschluß- und Verlegepläne Fehler in der Praxis nicht vermeiden lassen.

Ausgehend vom Stande der Technik und der vorstehend aufgezeigten Problematik liegt der Erfindung die Aufgabe zugrunde, eine Maschinenanlage der eingangs angegebenen Art dahingehend zu verbessern, daß die Anzahl der Verbindungsleitungen deutlich reduziert werden kann.

Diese Aufgabe wird bei einer gattungsgemäßen Maschinenanlage gemäß der Erfindung dadurch gelöst, daß zumindest ein Teil der Aktoren zu einer Gruppe zusammengefaßt ist und daß jedem der Aktoren in dieser Gruppe jeweils in seiner unmittelbaren Nähe folgende Schaltkreise zugeordnet sind:

a) eine Hilfssteuereinheit, die mit der zentralen Steuereinheit über einen Datenbus verbunden ist, und

b) eine Leistungsverstärkereinheit, die mit der zentralen Leistungsverteilereinheit über einen Leistungsbus und mit der Hilfssteuereinheit ihres zugeordneten Aktors direkt verbunden ist.

Das Teilmerkmal a) der erfindungsgemäßen Lösung bringt den Vorteil mit sich, daß für mindestens einige der Aktoren, von denen normalerweise jeder über mehrere Verbindungsleitungen mit der znetralen Steuereinheit zu verbinden wäre, nur noch ein einziger Datenbus bis zum Schaltschrank geführt werden muß.

Das zweite Teilmerkmal b) der erfindungsgemäßen Lösung bringt den Vorteil mit sich, daß anstelle jeweils eines Leistungskabels zwischen der zentralen Leistungsverteilereinheit und dem betreffenden Aktor nur noch ein einziger Leistungsbus verlegt werden muß, an den die einzelnen Aktoren über ihre individuell zugeordneten Leistungsverstärkereinheiten angeschlossen werden, die ihrerseits direkt mit den Hilfssteuereinheiten ihrer zugeordneten Aktoren verbunden sind.

Beide Teilmerkmale bieten darüberhinaus den zusätzlichen, in der Praxis sehr wichtigen Vorteil, daß an die bestehende Anlage problemlos zusätzliche Aktoren angeschlossen werden können.

Ein weiterer wichtiger Vorteil ergibt sich daraus, daß sowohl die Hilfssteuerung wie auch die Leistungsverstärkereinheit ganz individuell auf den jeweils zugeordneten Aktor abgestimmt werden können, was bei den bisherigen Schaltschranklösungen normalerweise nicht der Fall ist.

Des weiteren bieten beide Teilmerkmale gemäß der Erfindung den wichtigen Vorteil, daß Störungen schneller ermittelt und einfacher behoben werden können, da relativ schnell festgestellt werden kann, ob die Betriebsstörung auf einen Fehler einer der Hilfssteuerungen oder einer der Leistungsverstärkereinheiten zurückzuführen sind, was bei den bisher üblichen Schaltschranklösungen ebenfalls nicht ohne weiteres möglich war.

Obwohl jedes der beiden erfindungsgemäßen Teilmerkmale, wie dies vorstehend dargelegt wurde, bereits für sich erhebliche Vorteile mit sich bringt, kommt der besondere Vorteil der Erfindung, nämlich der Denzentralisierung von bisher zentral zusammengefaßten Einrichtungen, dadurch erst voll zum Tragen, daß beide Teilmerkmale, insbesondere für alle oder jedenfalls die meisten zu einer Maschinenanlage gehörigen Aktoren gleichzeitig realisiert werden.

Durch diese erfindungsgemäße Ausbildung der Maschinenanlage können die Hilfssteuerung und die Leistungsverstär kereinheit direkt miteinander in Verbindung treten, während gleichzeitig aufgrund der Verbindung des Datenbusses mit der zentralen Steuereinheit die Möglichkeit besteht, das Arbeiten der einzelnen Aktoren aufgrund übergeordneter Anlagendaten durch die zentrale Steuereinheit zu koordinieren, wobei an dieser Stelle darauf hinzuweisen ist, daß sowohl die zentrale Steuereinheit als auch die zentrale Leistungsverteilereinheit ensprechend ihres reduzierten Aufgabenbereichs einfacher und billiger ausgebildet werden können als bisher. Insbesondere gilt dies für die zentrale Leistungsverteilereinheit, die bei Anschluß aller Aktoren an einen gemeinsamen Leistungsbus im einfachsten Fall nur noch aus einem Netzanschluß, insbesondere einem Drehstromanschluß mit Hauptschalter und Hauptsicherungen sowie gegebenenfalls mit Sicherheitsabschaltkreisen besteht.

Bei einer Maschinenanlage gemäß der Erfindung umfaßt die einem Aktor zugeordnete Hilfssteuerung eine Ansteuerlogik, welche die über den Datenbus eintreffenden Daten in entsprechende Steuerbefehle für die Leistungsverstärkereinheit umsetzt, durch welche die Speisung des betreffenden Aktors erfolgt. Dabei ist die Ansteuerlogik in jedem Fall so ausgebildet, daß sie die üblichen Störungen des zugeordneten Aktors, bei einem Elektromotor beispielsweise das Auftreten einer Übertemperatur oder eines Überstroms, anhand der entsprechenden Ausgangssignale der für die Erfassung derartiger Betriebsstörungen vorgesehenen Sensoren auswerten und für die Rückmeldung an die zentrale Steuereinheit über den Datenbus aufbereiten kann.

Während bei einer Maschinenanlage gemäß der Erfindung die Ansteuerlogik im Prinzip bereits eine vollständige Hilfssteuereinheit bilden kann, hat es sich in vorteilhafter Ausgestaltung der Erfindung als günstig erwiesen, wenn die Hilfssteuereinheit zusätzlich einen Mikroprozessor und einen Parameterspeicher umfasst, wobei dieser Parameterspeicher bereits Bestandteil des Mikroprozessors sein kann, insbesondere derart, daß Parameterspeicher und Mikroprozessor auf einem einzigen Halbleiterchip realisiert sind.

Diese Ausgestaltung einer Hilfssteuereinheit einer erfindungsgemäßen Maschinenanlage erweitert die Selbständigkeit der Hilfssteuereinheiten bzw. deren Unabhängigkeit von der zentralen Steuereinheit, da durch den Einsatz des Parameterspeichers mehr oder weniger komplizierte Arbeitszyklen eines Aktors vorprogrammiert werden können, und da außerdem die Möglichkeit besteht, auch die Ausgangssignale von Wegaufnehmern, wie z.B. Endschaltern, Winkelcodierern und dergleichen, intern, d.h. innerhalb der Hilfssteuereinheit selbst auszuwerten, so daß der Datenaustausch über den Datenbus auf ein Minimum reduziert wird, wobei sich im allgemeinen auch eine höhere Geschwindigkeit für die Datenverarbeitung ergibt.

Der Datenbus eröffnet darüber hinaus die vorteilhafte Möglichkeit, bei der Einrichtung der Maschinenanlage, bei Inspektionen, Probeläufen und dergleichen in unmittelbarer Nähe des jeweils betroffenen Aktors über eine geeignete Schnittstellenschaltung eine Prüfein heit mit Tastatur, Monitor und dergleichen anzubringen, so daß sich häufig die Möglichkeit ergibt, auf entsprechend komplizierte und teure Einrichtungen zu verzichten, wie sie üblicherweise an komplizierten Werkzeugmaschinen und dergleichen als ständige Einrichtungen vorgesehen sind. Besonders vorteilhaft ist es ferner, wenn in Ausgestaltung der Erfindung mindestens einer der Aktoren als Elektromotor ausgebildet ist und wenn die Hilfssteuerung und die Leistungsverstärkereinheit für diesen Elektromotor unmittelbar am Gehäuse desselben angeordnet sind, insbesondere in einem vergrößerten Klemmenkasten des Elektromotors. Diese Ausgestaltung bringt den besonderen Vorteil mit sich, daß bei einer Betriebsstörung das gesamte Anggregat, d.h. der Motor einschließlich Hilfssteuerung und Leistungsverstärkereinheit ausgetauscht und dann in aller Ruhe in einer Werkstatt repariert werden kann, während die Maschinenanlage mit dem Austauschaggregat weiterarbeitet.

Weiterhin kann bei der Integration von Hilfssteuerung und Leistungsverstärkereinheit in das Motoraggregat von Anfang an eine besonders sorgfältige Abstimmung der einzelnen Baugruppen und -elemente auf den verwendeten Motor erfolgen, wobei sich in weiterer Ausgestaltung der Erfindung insbesondere auch die vorteilhafte Möglichkeit bietet, die Kühleinrichtungen des Motors selbst auch zur Kühlung der Leistungsverstärkerelnheit und, soweit erforderlich, der Hilfssteuerung elnzusetzen.

Weitere Einzelheiten und Vorteile der Erfindung werden nachstehend anhand von Zeichnungen noch näher erläutert. Es zeigen:

Fig. 1 eine schematische Darstellung einer bevorzugten Ausführungsform einer Maschinenanlage gemäß der Erfindung;

Fig. 2 eine schematische Darstellung einer bevorzugten Ausführungsform einer Hilfssteuerung für eine Maschinenanlage gemäß Fig. 1;

Fig. 3 eine gegenüber der Untereinheit gemäß Fig.2 ergänzte Untereinheit, und

Fig. 4 eine bevorzugte Ausführungsform eines als Elektromotor ausgebildeten Aktors für eine Maschinenanlage gemäß Fig. 1.

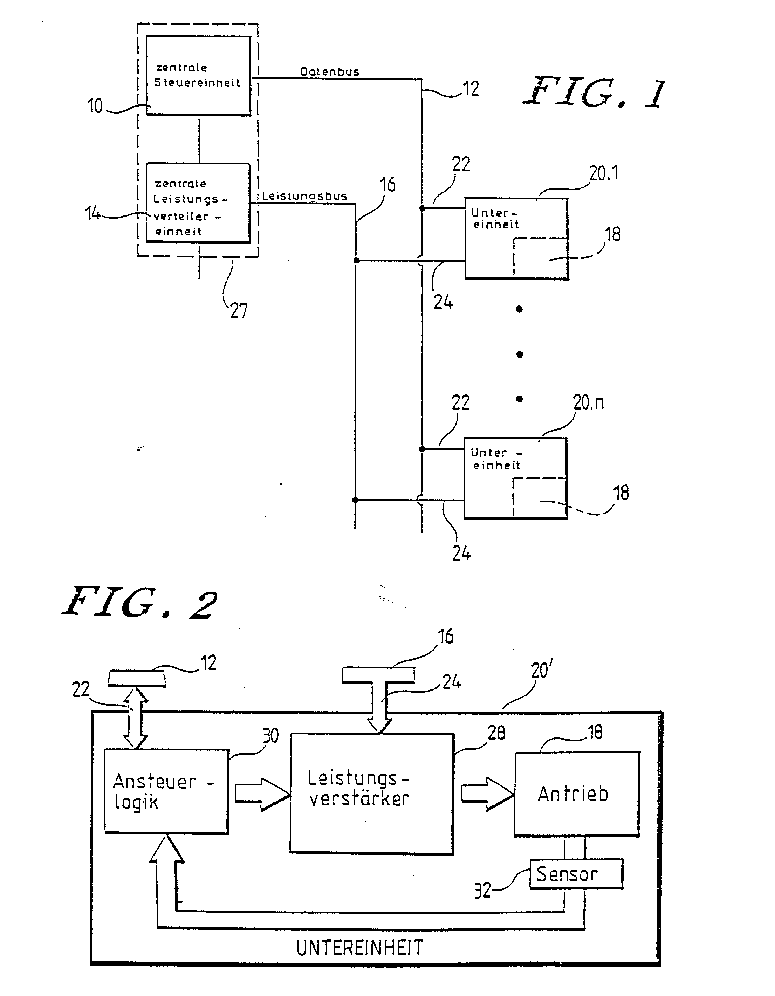

Im einzelnen zeigt Fig. 1 eine Maschinenanlage mit einer zentralen Steuereinheit 10, an die ein Datenbus 12 angeschlossen ist, und mit einer zentralen Leistungsverteilereinheit 14, an die ein Leistungsbus 16 angeschlossen ist. Zu der Maschinenanlage gemäß Fig. 1 gehören ferner mehrere Aktoren 18, die mit zugeordneten Einrichtungen jeweils zu einer Untereinheit 20.1 bis 20.n zusammengefasst sind. Jede dieser Untereinheiten 20.1 bis 20.n ist über einen ersten Anschluß 22 mit dem Datenbus 12 und über einen zweiten Anschluß 24 mit dem Leistungsbus 16 verbunden.

Man erkennt, daß bei der Erfindungsgemäßen Maschinenanlage nur noch die beiden Busleitungen 12,16 erforderlich sind, um die verschiedenen Untereinheiten 20.1 bis 20.n mit den zentralen Einrichtungen, nämlich mit der zentralen Steuereinheit 10 und mit der zentralen Leistungsverteilereinheit 14 zu verbinden, wobei diese beiden Einheiten in einem einzigen Schaltschrank 27 zusammengefasst sein können, wie dies in Fig. 1 gestrichelt angedeutet ist.

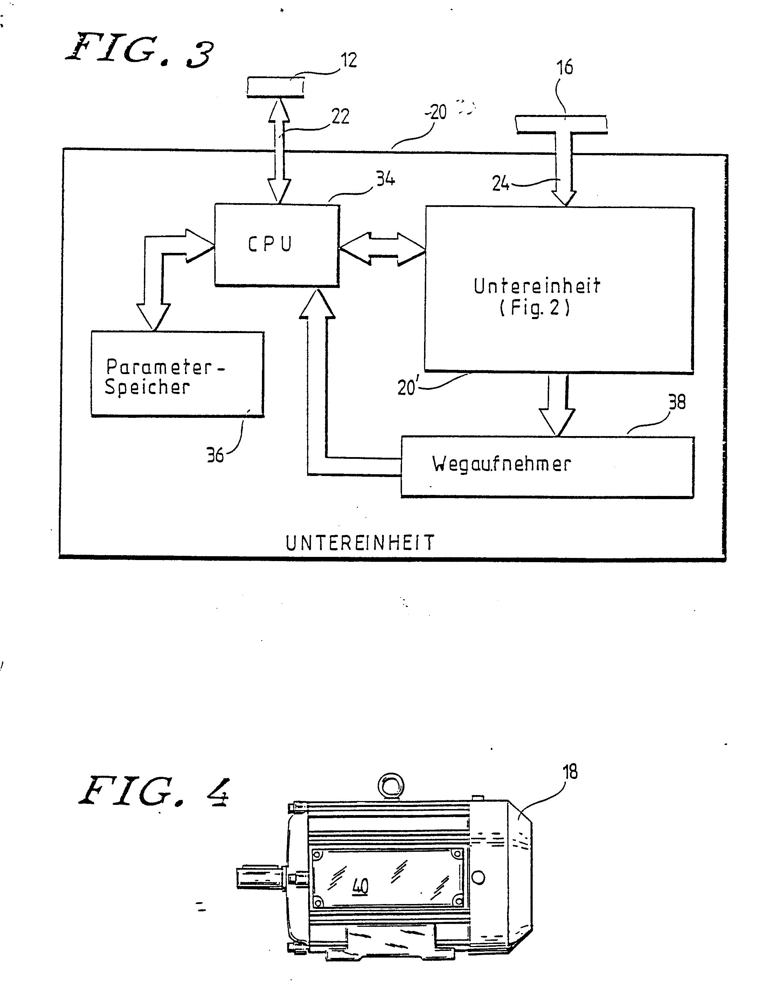

Bei der Betrachtung der Fig. 1 wird auf den ersten Blick deutlich, daß durch die erfindungsgemäße Lösung, nämlich durch die Zuordnung einer Hilfssteuerung und einer Leistungsverteilereinheit zu einzelnen Aktoren - bei dem Ausführungsbeispiel gemäß Fig. 1 zu allen Aktoren 18 - eine außerordentliche Verringerung der zwischen den zentralen Einrichtungen 10,14 und den Aktoren 18 zu verlegenden Leitungen erreichbar ist, wie dies anhand der Erläuterung des Aufbaus der Untereinheiten 20.1 bis 20.n aus der nachfolgenden Beschreibung von Fig. 2 und 3 der Zeichnung noch deutlich werden wird.

Im einzelnen zeigt Fig. 2 einen Aktor bzw. einen Motor 18, der eingangsseitig von einer Leistungsverstärkereinheit 28 gespeist wird. Die Leistungsverstärkereinheit 28 ist unter der Voraussetzung, daß es sich bei dem Motor 18 um einen Drehstrommotor handelt, über die dreiadrige Verbindungsleitung 24 mit dem Leistungsbus 16 verbunden, der vorzugsweise durch eine Stromschienanordnung gebildet ist, von der die Verbindungsleitungen 24 an beliebiger, geeigneter Stelle abzweigen können. Die Leistungsverstärkereinheit 28 wird durch eine Hilfssteuereinheit angesteuert, die im Prinzip aus einer relativ einfachen Ansteuerlogik 30 bestehen kann, welche über die Verbindungsleitung 22 mit dem Datenbus 12 verbunden ist,. Weiterhin ist die Ansteuerlogik 30 mit einem Geber bzw. einem Sensor 32 verbunden, welcher die im Einzelfall interessierenden Daten des Motors 18 erfaßt, beispielsweise das Vorliegen einer Übertemperatur, das Auftreten eines Überstroms und/oder die Motordrehzahl. Dabei versteht es sich, daß beim Erfassen mehrerer Größen auch eine entsprechende Anzahl von Sensoren bzw. Gebern vorhanden sein muß. Insofern ist die Darstellung gemäß Fig. 2 lediglich als eine schematische Darstellung zu betrachten.

Wenn ein Aktor bzw. Motor 18 mit den in Fig. 2 gezeigten Schaltkreisen zu einer Baugruppe bzw. Untereinheit zusammengefaßt ist, dann kann die Ansteuerlogik 30 beispielsweise die Signale "NOT-AUS", "FREIGABE" und codierte Informationen über den Sollwert der Drehzahl des Motors 18 über den Datenbus 12 empfangen und andererseits gewisse Signale, wie zum Beispiel das Signal "STÖRUNG SENSOR", "STÖRUNG ÜBERTEMPERATUR", "STÖRUNG ÜBERSTROM" und eine codierte Information über den Ist-Wert der Drehzahl über den Datenbus 12 an die zentrale Steuereinheit 10 aussenden.

Man erkennt, daß bei dieser einfachen Ausgestaltung der Hilfssteuerung als Ansteuerlogik 30 ein regelmäßiger Datenaustausch zwischen der zentralen Steuereinheit 10 und der Ansteuerlogik 30 erforderlich ist, wobei die Menge der in beiden Richtungen zu übertragenden Daten bereits bei einem einfachen Antreib erheblich sein kann. Die in Fig. 2 gezeigte Untereinheit 20′ ist aber dennoch bereits eine vollständige Untereinheit, die in der Maschinenanlage gemäß Fig. 1 als eine der Untereinheiten 20.1 bis 20.n eingesetzt werden könnte.

Erfindungsgemäß wird es jedoch bevorzugt, die einzelnen Untereinheiten 20.1 bis 20.n in der in Fig. 3 gezeigten Weise auszugestalten, wobei jeder Untereinheit 20′ gemäß Fig. 2 zusätzlich zu der bereits vorhandenen Ansteuerlogik 30 ein Mikroprozessor 34 und ein Parameterspeicher 36 zugeordnet, so daß dann in vorteilhafter Ausgestaltung der Erfindung aufgrund der Rechen- und Speicherkapazität dieser zusätzlichen Einrichtungen auch die Möglichkeit besteht, die Daten von weiteren Sensoren bzw. Gebern oder Wegaufnehmern 38 zu erfassen, bei denen es sich beispielsweise um Endschalter, Winkelcodierer usw. handeln kann. Außerdem ermöglicht das Vorhandensein des Mikroprozessors 34 in Verbindung mit dem Parameterspeicher 36 das Schrittweise Abarbeiten von komplizierten Arbeitszyklen, wobei alle nur die jeweilige Untereinheit bzw. den jeweiligen Motor 18 betreffenden Abläufe in der Untereinheit 20 intern durchgeführt werden können, ohne daß über den Datenbus 12 größere Mengen von Daten von und zu der zentralen Steuereinheit 10 übertragen werden müßten. Ein Datenaustausch mit der znetralen Steuereinheit 10 ist vielmehr nur noch für übergeordnete Ereignisse erforderlich, von denen auch andere Aktoren bzw. Motoren 18 bzw. deren zugeordnete Untereinheiten 20 betroffen sind.

Fig. 4 zeigt einen Elektromotor 18, bei dem der übliche Klemmenkasten am Motorgehäuse als vergrößerter Klemmenkasten 40 ausgebildet ist.

Es hat sich gezeigt, daß eine komplette Untereinheit 20 einer erfindungsgemäßen Maschinenanlage, beispielsweise eine Untereinheit gemäß Fig. 3, problemlos in einem solchen vergrößerten Klemmenkasten 40 untergebracht werden kann, wenn die einzelnen Schaltkreise der Untereinheit 20 aus integrierten Schaltungen und aus einzelnen Leistungshalbleitern aufgebaut wird, wobei die Verlustwärme der Leistungshalbleiter problemlos über das Motorgehäuse abgeführt werden kann, welches üblicherwiese durch äußere Kühlrippen und durch eine Luftumwälzung im Inneren des Motors mit Hilfe eines Lüfterrades gekühlt wird.

Daß die zusätzliche Verlustwärme der Schaltkreise einer erfindungsgemäßen Untereinheit 20 bzw. 20′ in der Praxis kaum ins Gewicht fällt, wird sofort deutlich, wenn man berücksichtigt, daß beispielsweise bei einem Elektromotor 18 mit einer Leistung von 2,2 kW eine Wärmeverlustleistung von etwa 16 bis 22% eintritt, d.h. eine Verlustleistung von etwa 350 bis 480 W, während die gesamte Wärmeverlustleistung einer in den Motor integrierten Schaltelektronik kleiner als 1 W ist und auch die Wärmeverlustleistung einer mit einem geregelten Frequenzumrichter arbeitenden Elektronik nur etwa 60 bis 80 W beträgt.

Weiterhin hat es sich gezeigt, daß der erforderliche Platzbedarf für die Unterbringung der Elektronik bzw. der Schaltkreise eine Untereinheit bei Motoren mit einer Leistung von 1 kW und mehr nur etwa das drei-bis vierfache der Größe des Klemmenkastens eines üblichen Normmotors beträgt.

Bei einer Maschinenanlage gemäß der Erfindung eröffnet sich somit die Möglichkeit, die einzelnen Motoren 18 mit integrierten elektronischen Untereinheiten auszubilden und auf diese Weise eine Dezentralisierung der üblicherweise im Schaltschrank zusammengefaßten Intelligenz zu erreichen, wobei jeder Motor - bei anderen Aktoren wie z.B. Pneumatikzylindern mit Magnetventilen ist die Situation ähnlich - nur noch an den Datenbus 12 und den Leistungsbus 16 anzuschließen ist sowie gegebenenfalls an in seiner Umgebung befindliche Wegaufnehmer 38. Insgesamt lässt sich damit eine erhebliche Vereinfachung der gesamten Maschinenanlage erreichen. Weiterhin kann bei einer Betriebsstörung einfach ein kompletter Motor samt integrierter Untereinheit ausgewechselt werden, so daß die Ausfallzeiten der Maschinenanlage insgesamt deutlich verkürzt werden können, da auf detaillierte Fehlersuche verzichtet werden kann. In der vorstehenden Beschreibung wurde im Interesse einer übersichtlichen Darstellung des prinzipiellen Aufbaus einer Maschinenanlage gemäß der Erfindung stets von einem Datenbus und von einem separaten Leistungsbus gesprochen, wobei diese beiden Busse 12,16 in den Zeichnungen auch getrennt dargestellt sind.

In vorteilhafter Ausgestaltung der Erfindung besteht jedoch die Möglichkeiten, einen einzigen Bus als kombinierten Leistungs- und Datenbus zu verwenden. Insbesondere besteht die Möglichkeit, die Daten in Form von frequenzmodulierten Signalen über ein oder mehrere Adern des Leistungsbusses zu übertragen. Weiterhin können der Datenbus 12 und der Leistungsbus 16 köperlich zu einem einzigen Strang zusammengefasst werden, indem beispielsweise zusammen mit den Adern des Leistungsbusses eine Glasfaser verlegt wird, über welche die Daten in Form von Lichtsignalen übertragen werden. In diesem Zusammenhang soll angemerkt werden, daß unter einem Datenbus im Sinne der vorliegenden Anmeldung alle technischen Einrichtungen zu verstehen sind, die eine Informationsübertragung gestatten, beispielsweise ein mehradriges Kabel (Parallelschnittstelle für die Übertragung binärcordierter Daten), ein Hochfrequenzübertragungskanal oder ein Glasfaserübertragungskanal.

Wie aus der vorstehenden Beschreibung deutlich wird, kann die Erfindung gemäß einer bevorzugten Ausführungsform statt in einer neuartigen Maschinenanlage auch in einem neuartigen Aktor gesehen werden, nämlich einem Aktor, insbesondere Elektromotor, für eine Maschinenanlage mit mehreren Aktoren, mit eine zentrale Steuereinheit umfassenden Steuereinrichtungen und mit eine zentrale Leistungsverteilereinheit umfassenden Leistungsversorgungseinrichtungen, bei der zumindest ein Teil der Aktoren zu einer Gruppe zusammengefaßt ist und bei der jedem der Aktoren in dieser Gruppe jeweils in seiner unmittelbaren Nähe folgende Schaltkreise zugeordnet sind: a) eine Hilfssteuereinheit, die mit der zentralen Steuereinheit über einen Datenbus verbunden ist, und

b) eine Leistungsverstärkereinheit, die mit der zentralen Leistungsverteilereinheit über einen Leistungsbus und mit der Hilfssteuereinheit ihres zugeordneten Aktors direkt verbunden ist, wobei jede Hilfssteuereinheit eine Ansteuerlogik umfaßt, mit deren Hilfe die über den Datenbus eintreffenden Daten in entsprechende Steuerbefehle für diejenige Leistungsverstärkereinheit umsetzbar sind, durch die die Speisung des der Hilfssteuereinheit zugeordneten Aktors erfolgt, der dadurch gekennzeichnet ist, daß seine zugeordnete Hilfssteuereinheit 30, 34, 36 zusätzlich zu der Ansteuerlogik 30 einen Mikroprozessor 34 und einen Parameterspeicher 36 umfaßt und zusammen mit der zugehörigen Leistungsverstärkereinheit 28 mechanisch direkt mit ihm verbunden ist.

## Patentansprüche

1. Maschinenanlage mit mehreren Aktoren, mit eine zentrale Steuereinheit umfassenden Steuereinrichtungen und mit eine zentrale Leistungsvertellereinheit umfassenden Leistungsversorgungseinrichtungen, **dadurch gekennzeichnet**, daß zumindest ein Teil der Aktoren zu einer Gruppe zusammengefasst ist und daß jedem der Aktoren in dieser Gruppe jeweils in seiner unmittelbaren Nähe folgende Schaltkreise zugeordnet sind:
a) eine Hilfssteuereinheit (30,34,36), die mit der zentralen Steuereinheit (10) über einen Datenbus (12) verbunden ist, und
b) eine Leistungsverstärkereinheit (28), die mit der zentralen Leistungsverteilereinheit (14) über einen Leistungsbus (16) und mit der Hilfssteuereinheit (30,34,36) ihres zugeordneten Aktors (18) direkt verbunden ist.

2. Maschinenanlage nach Anspruch 1, dadurch gekennzeichnet, daß jede Hilfssteuereinheit (30, 34, 36) eine An steuerlogik (30) umfaßt, mit deren Hilfe die über den Datenbus (12) eintreffenden Daten in entsprechende Steuerbefehle für diejenige Leistungsverstärkereinheit (18) umsetzbar sind, durch die die Speisung des der Hilfssteuereinheit (30, 34, 36) zugeordneten Aktors (18) erfolgt.

3. Maschinenanlage nach Anspruch 2, dadurch gekennzeichnet, daß die Ansteuerlogik (30) derart ausgebildet ist, daß mit ihrer Hilfe Störungen des ihr zugeordneten Aktors (18) anhand entsprechender Ausgangssignale der für die Erfassung dieser Störungen vorgesehenen Sensoren (32) auswertbar und für eine Rückmeldung an die zentrale Steuereinheit (10) aufbereitbar sind.

4. Maschinenanlage nach Anspruch 2 oder 3, dadurch gekennzeichnet, daß die Hilfssteuereinheit zusätzlich zu der Ansteuerlogik (30) einen Mikroprozessor (34) und einen Parameterspelcher (36) umfasst.

5. Maschinenanlage nach Anspruch 4, dadurch gekennzeichnet, daß mindestens ein Wegaufnehmer (38) vorgesehen ist, dessen Ausgangssignale von dem Mikroprozessor (34) erfassbar und auswertbar sind.

6. Maschinenanlage nach einem der Ansprüche 1 bis 5, dadurch gekennzeichnet, daß mindestens einer der Aktoren (18) direkt mit seiner zugeordneten Hilfssteuereinheit (30,34,36) und seiner zugeordneten Leistungsverstärkereinheit (28) verbunden ist.

7. Maschinenanlage nach Anspruch 6, dadurch gekennzeichnet, daß der Aktor (18), die Hilfssteuereinheit (30,34,36) und die Leistungsverstärkereinheit (28) gemeinsame Kühleinrichtungen umfassen.

8. Maschinenanlage nach einem der Ansprüche 1 bis 7, dadurch gekennzeichnet, daß nur ein einziger, als kombinierter Leistungs- und Datenbus dienender Bus vorgesehen ist.

9. Maschinenanlage nach Anspruch 8, dadurch gekennzeichnet, daß die Daten in Form frequenzmodulierter Signale über mindestens eine Ader des Leistungsbusses (16) übertragbar sind.

10. Maschinenanlage nach einem der Ansprüche 1 bis 6, dadurch gekennzeichnet, daß der Datenbus als Lichtleiter ausgebildet ist.

0275992

FIG. 1

zentrale Steuereinheit — 10

Datenbus — 12

zentrale Leistungsverteilereinheit — 14

Leistungsbus — 16

27

22

Untereinheit — 20.1

18

24

22

Untereinheit — 20.n

18

24

FIG. 2

12

16

24

22

20'

Ansteuerlogik — 30

Leistungsverstärker — 28

Antrieb — 18

Sensor

32

UNTEREINHEIT

0275992

## FIG. 3

```
              12              16
                    20
                34        24

      ┌─────┐        ┌──────────────┐
      │ CPU │ ◄────► │              │
      └─────┘        │ Untereinheit │
   ┌─────────┐       │  (Fig. 2)    │
   │Parameter-│      │              │
   │ Speicher │      │   20'        │
   └─────────┘       └──────────────┘
        36                      38
                  ┌──────────────┐
                  │ Wegaufnehmer │
                  └──────────────┘

              UNTEREINHEIT
```

## FIG. 4

18

40